# EUROPEAN PATENT APPLICATION

(11) **EP 0 602 300 A1**
(43) Date of publication of application: **22.06.1994**
(21) Application number: 92830676.0
(22) Date of filing: 17.12.1992
(51) Int. Cl.: A63B 55/08, B62K 11/00

(54) **Motorized golf cart**

(71) Applicant: Piazzi, Roberto, I-44011 Argenta (Ferrara) (IT)
(72) Inventor: Piazzi, Roberto, I-44011 Argenta (Ferrara) (IT)
(74) Representative: Sassatelli, Franco T., Dr.

(57) **Abstract**

The invention concerns a motorized golf cart, collapsible to permit transport thereof in the trunk of a motor vehicle, comprising a basic lineat scooter part and a detachable golf kit container part. When the two parts are connected a support part (35) acts as a seat. When separated the golf kit container part can be puled along using support part (35) as a handle. In another mode of operation the user can pull the scooter part by pivoting steering column (13) about a horizontal axis (9) and gripping knob (18).

## Description

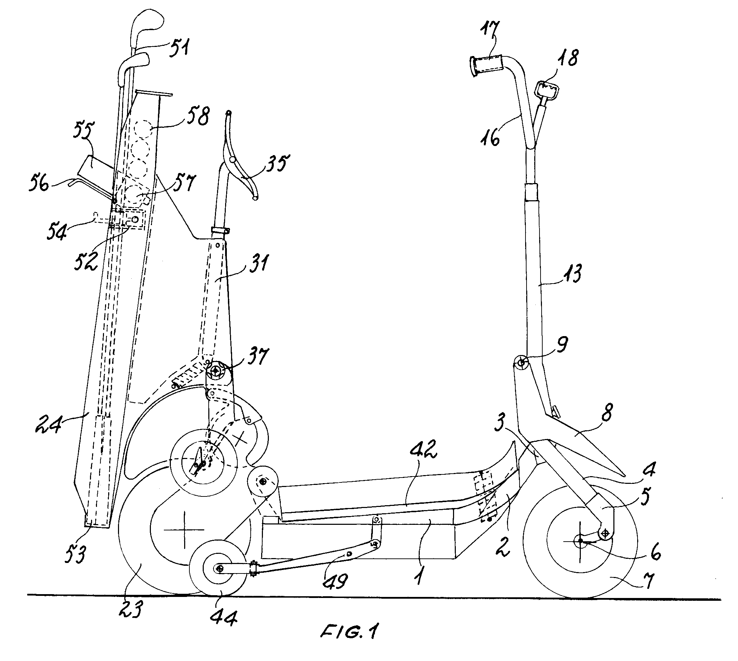

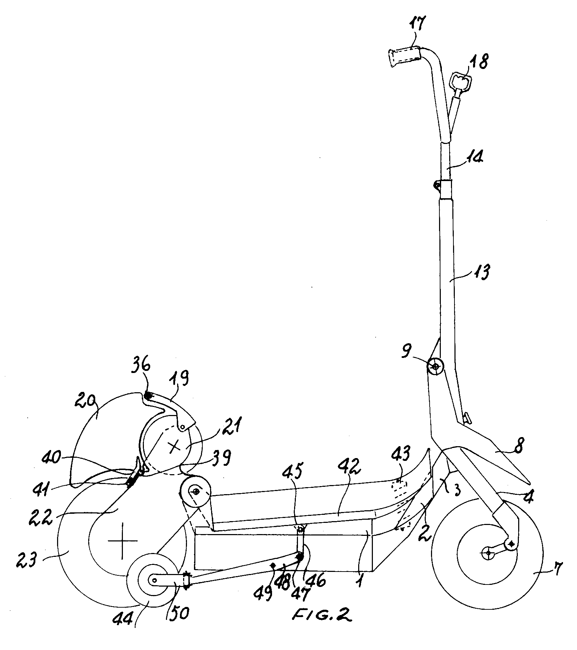

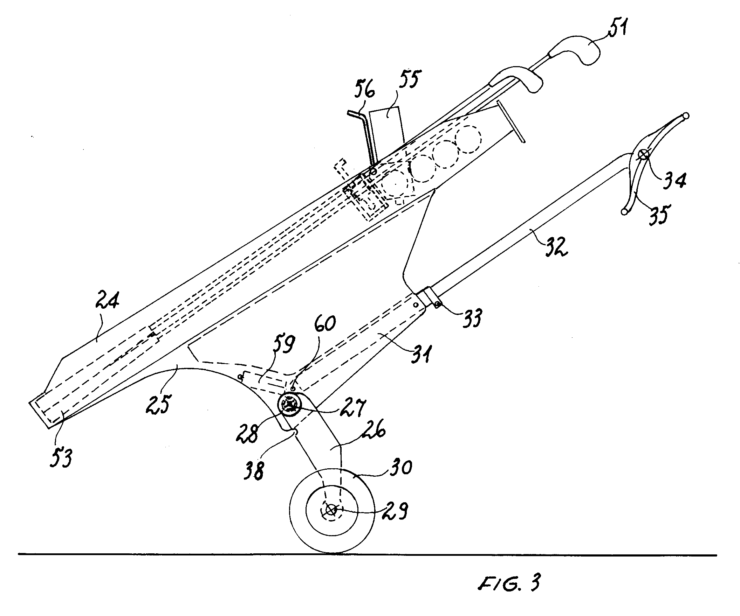

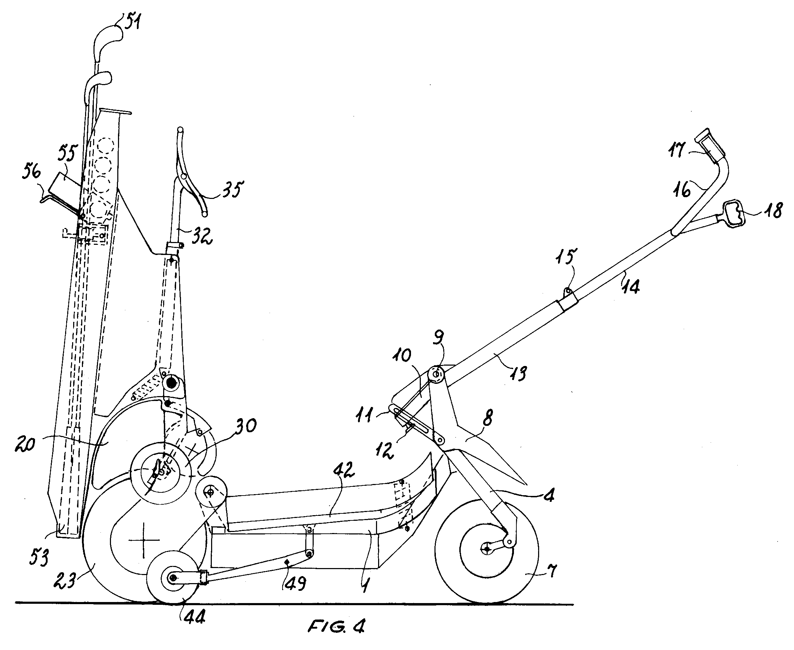

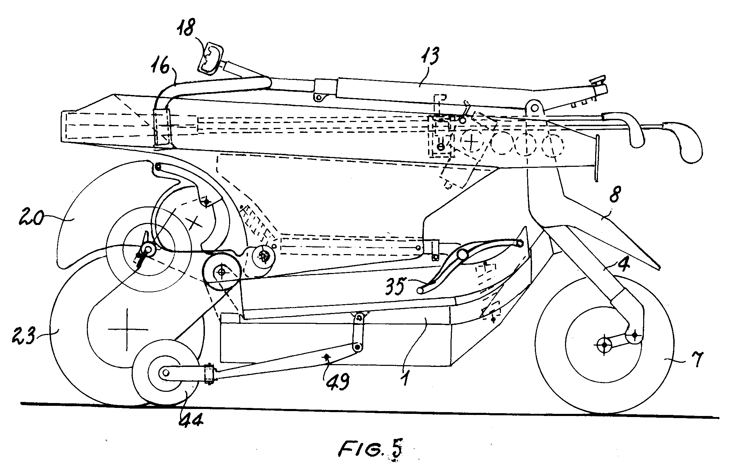

The invention is concerned with new results in comparison with the prior art known in the European Patent Application no. 92830231.4 filed on May 18, 1992 by the same Applicant principally foreseen a motorized vehicle from which is separated, with manual rapid redemption, a standing behind part to be used, by the different use and the different disposition of its parts, such clubs container cart to be pulled by the player. This permits to the same player to choose each time both the type of transpor means to bring with him than the different use of the same vehicle on the golf links. To better understand the statement of motives of the first of said possibility that the invented motorized golf cart permits, it must be considered that different are the transport kit to be used during the different play phases being to be considered trainings, competitions with short ways and tournaments which actually come to need both of a pulled clubs container cart than of a motorized vehicle. In the case instead of different use the motorized vehicle comes to avoid the problem coming at the player owing to move on a means with the constant search to keep balance and moreover it permits to use the transport kit more suitable to the way characteristics. The invented motorized golf cart is arranged in two different drive conditions: in the first one the driver-player stands on a damped linear scooter with longitudinal intermediate disposition on the scooter frame leaning the posterior part of his body again the support part while in the second condition the same player drives from the ground the self-moving vehicle by a grip knob on the steering gear setting the vehicle moving in advancement. This last drive possibility is permits by that, going out from the linear scooter support, the player-driver gets in force with immediate effect a wheels device which guarantees the vehicle balance position keeping. The motorized vehicle is compacted a reduction in size to permit its placing in smallest space and particularly into the trunk of a passanger automobile-type motor vehicle and moreover it foresees the disposition, with permanent placing in suited rack, of a series of clubs and by manual drive the coming from a dispenser of the play-ball on the player palm. Substantially the motorized golf cart is arranged for composition of a basic part, foreseen an electric motor, without support part and without play kit container transport means (so being a self-moving linear scooter) with another subsidiary part foreseen the support part and the cart for the play kit transport, this last part to be used also separated, by suited adjustments realized always by only manual agibility, also such container for clubs cart with manual dragging. The linear scooter basic part foresees, in front prosecution of the frame part 1, on the slanting support 2 the steering gear group 3 of the bracket 4 provided with a monoshock absorber 5 bringing on lever 6 the wheel 7. Said bracket 4 on the upper part is integral with a support frame 8 with two arms for the support, on rotation joint 9 to be used by outer shock absorber 10 and by tie rod 11 regulated by screw knob 12, of the steering gear column with initial coaxial part 13 and further axial part 14, blocked to the desired height by screw clasp 15, bringing a handle-bar 16 with grip 20 for rotation drive of the motor acceleration, and centrally integral with a grip knob 19 for the vehicle moving drive from the ground. In posterior prosecution of the linear frame part 1 the further frame part 19 is integral with a standing beyind unitized body 20 for contact support of the cart subsidiary part, to be used also such container for the electronic instruments, of the electric motor group 21 and of a bracket 22 with in its inside the moving-transmission group to the wheel 23. The subsidiary part foresees a container body, characterized by two sectors: a store 24 for the clubs and the balls disposition and a store 25 for the clothing and various items stored, brings on couple of arms 26, to be blocked in the desired position on gear pin joint 27 by screw knob pin 28, bringing on rotation pins 29 the wheels 30. The clothing store 25 morevoer foresees a coaxial seat 31 bringing the column 32 blocked in getting out by screw clasp 33 and bearing, on joint 34 screw blocking, a bivalent part 35 to be alternatively used such gripping for the clubs container cart dragging and such support part of the driver-player posterior part stands on the motorized vehicle. The initial setting out of the subsidiary part on the basic part is actuated by support of the inside parts of the rotation pins 29 into the housing seats 39 of the arms of the bracket 22 with position keeping guarantees by the spring beating clasps 40 on rotation joints 41. For the connection of said subsidiary part on the basic one are foreseen laterally to the frame part 19 volute seats 36 for mounting with axial disposition of two knob dowel screws 37 which placed into the housing seats 38 of the arms 26 block these arms in position. For the separation of the kit container subsidiary part it is initially unscrewed the dowel screws 37 and it is rotated the same subsidiary part in clockwise on the unitized body 20 so determining the getting out of the dowel screws 37 from the housing seats 38; then said subsidiary part is raised actuating the divarication opening of the clasps 40 and consequently the getting out from the housing seats 39 of the rotation pins 29. To arrange the subsidiary part for the use such manually pulled clubs container cart acting on the screw clasp 33 it is brought the column 32 to the desired length and are brought in position the arms 26 acting with the screw knob pins 28. The motorized vehicle foresees an automatic fitting out device which guarantees the balance keeping of the vehicle when the driver goes out on the ground. Said device foresees a linear scooter 42, for standing of the driver, sets up on shock absorber 43 going on the frame slanting support 2 which comes to act such starting of a balancing mechanism which drives the coming on the ground, with simmetric disposition laterally to the back wheel 23, of a couple of wheels 44 when stops the pressure actuated by the driver on the linear scooter 42. Said balancing mechanism foresees, in intermediate position under the linear scooter 42, on rotation joints 45 drive rods 46 bringing on joints 47 linear levers 48 articulated in rotation on part 49 in intermediate position on the linear frame part 1 and bringing on their ends, on adjustable supports 50, the wheels 44 for the balance keeping. The motorized vehicle in one of its use is driven by the player stands on the linear scooter 42, with support makes easy by the shock absorber 43, with his posterior part against the support part 35 acting as seat and driving by the handle-bar 16 with acceleration drive of the motor 21 actuated by the grip 17. In such condition the balance keeping wheels 44 are raised. In other use the motorized vehicle in moving is driven by the driver on the ground with gripping on the grip knob 18 by previous adjustment of the steering gear column axial part 14 blocking in position with the clasp 15 and opportunately regulating the inclination by the outer shock absorber 10 and of the tie rod 11 regulated in position by screw knob 12. In such drive condition the motorized vehicle is keeping in balance condition by the disposition on the ground of the couple of wheels 44. To arrange the motorized vehicle for its reduction in size are as a first step unscrewed the dowel screws 37, to permit the getting out of the same from the housing seats 38 of the arms 26, and is put in clockwise rotation on the pins 29 the clubs container cart part to a lower stop limit. Then, acting on the outer shock absorber 10 and on the tie rod 11 by the knob 12, is put in overlay on said part the steering gear column rotating it in counterclockwise on its joint 9 and blocking then in position. The kit store 24 is equipped with a rack 52 for the disposition of the necessary clubs 51 to permit their immediate individuation and to avoid contacts between the same. The clubs disposition device foresees housings 53 into which is introduced the handle of the clubs 51. Then rotating in opening on spring of a mobile housing sector 54, actuated by the player making lever with his hand on the equal adjacent sectors, is coming to determine an introduction opening sufficient for the passage of the rod of the club 51. Releasing the mobile sector 54 is coming to block the club 51 into the rack 52. The kit store 24 morevoer foresees a dispenser 55 which by lowering of a drive 56, after to have got over the retention effect, makes to arrive on the player palm the ball 57. Releasing the drive 56 the dispenser 55 takes away its initial position so to permit the reloading of other ball foresees into the side stores 58. To permit the reloading of the balls from one of the store 58 to the other one the dispenser 55 is rotated of 90°. The same dispenser 55 by pressure on it axis can be made reenter into the kit store 24 so to realize the size reduction of the motorized vehicle. To make easy the support condition of the driver on the support part 35 acting as seat the column 32 is connected on joint 60, in non- use condition of the screw clasp 33, on shock absorber 59. The motorized vehicle is illustrated in right lateral views in drawings of sheets 1, 2, 3, 4 and 5. In sheet 1 fig. 1 is view of the motorized vehicle arranged for the use. In sheet 2 fig. 2 is view of the sole basic part. In sheet 3 fig. 3 is view of the subsidiary part in manual dragging condition. In sheet 4 fig. 4 is view of the motorized vehicle arranged for the drive actuated by the driver on the ground. In sheet 5 fig. 5 is view of the vehicle arranged in its reduction size but always in balance condition by means of the couple of wheels 44 with support laterally to the back wheel 30.

## Claims

1. Motorized golf cart foreseen a linear scooter basic part with steering gear group (3) of the bracket (4) bringing lower the front wheel (7) and on the upper part a support frame (8) for the support of the steering gearl column with handle-bar (16); foreseen a further frame part (19) with standing beyind unitized body (20), electric motor group (21) and bracket (22) with in its inside the moving-transmission group to the back wheel (23); foreseen a subsidiary part with container body formed by two sectors (24 and 25) and by a bivalent support part (35) characterised in that is arranged in two different drive conditions: in the first one the driver-player stands on the frame linear scooter (42) leaning the posterior part of his body again the support part (35) acting as seat and driving by the handle-bar (16) while in the second condition the same player drives from the ground the self-moving vehicle by gripping of the grip knob (18) of the handle-bar (16) by previous adjustment of the steering gear column coaxial part (13); the initial setting out of the subsidiary part on the basic part is actuated by support of the inside parts of the rotation pins (29) into the housing seats (39) of the arms of the bracket (22) with position keeping guarantees by the spring beating clasps (40) on rotation joints (41); for the connection of said subsidiary part on the basic one are foreseen laterally to the frame part (19) volute seats (36) for mounting with axial disposition of two knob dowel screws (37) which placed into the housing seats (38) of the arms (26) block these arms in position; for the separation of the kit container subsidiary part it is initially unscrewed the dowel screws (37) and it is rotated the same subsidiary part in clockwise on the unitized body (20) then said subsidiary part is raised actuating the divarication opening of the clasps (40) and consequently the getting out from the housing seats (39) of the rotation pins (29), the subsidiary part released can be used, by suited adjustment realized manually, such container for clubs cart pulled by the player on the ground; it is compacted a reduction in size to permit its placing in smallest space bringing in clockwise rotation on pins (29) the clubs container cart part to a lower stop limit then bringing in overlay on said part the steering gear column rotating it in counterclockwise on its joint (9) and blocking then in position.

2. Motorized golf cart, as in claim 1, characterized in that the steering gear column is made by an initial coaxial part (13) and further axial part (14) to be blocked to the desired height by screw clasp (15).

3. Mororized golf car, as in claim 1, characterized in that the handle-bar (16) foresees a grip (17) for drive of the motor acceleration and it is integral with a grip knob (18) for the vehicle moving drive from the ground.

4. Motorized golf cart, as per claim 1, characterized in that the container body of the subsidiary part formed by two housing sectors (24 and 25) is brought on couple of arms (26) to be blocked in the desired position on gear pin joints (27) by screw knob pins (28) bringing on rotation pins (29) the wheels (30); the same container body moreover foresees a coaxial seat (31) bringing the column (32) bearing the bivalent part (35) to be used as seat or for the dragging.

5. Motorized golf cart, as in claim 1, characterized in that to arrange the subsidiary part for the use such manually pulled clubs container cart acting on the screw clasp (33) it is brought the column (32) to the desired length and are brought in position the arms (26) acting with the screw knob pins (28).

6. Motorized golf cart, as in claim 1, characterized in that is foreseen an automatic fitting out device which guarantees the balance keeping of the vehicle when the driver goes out on the ground.

7. Motorized golf cart, as in claim 6, in that tha balance device foresees a linear scooter (42), for standing of the driver, sets up on shock absorber (43) going on the frame slanting support (2) which comes to act such starting of a balancing mechanism which drives the coming on the ground of a couple of wheels (44) when stops the pressure actuated by the driver on the linear scooter (42); said balancing mechanism in intermediate position foresees on rotation joints (45) drive rods (46) bringing on joints (47) linear levers (48) articulated on part (49) in intermediate position on the linear frame part (1) and bringing on their ends the wheels (44) for the balance keeping.

8. Motorized golf cart, as per claim 1, in that in the first drive condition the wheels (44) for the balance keeping are raised.

9. Motorized golf cart, as per claim 1, in that in the second drive condition the wheels (44) for the balance keeping lay on the ground laterally to the back wheel (23).

10. Motorized golf cart, as per claim 4, in that the housing sector (24) for the play kit is equipped with a rack (52) for the disposition of the clubs and with a dispenser (55) for the balls.

11. Motorized golf cart, as per claim 10, in that the rack (52) foresees housing (53) into which is introduced the handle of the clubs (51); the rotating in opening on spring the mobile housing sector (54), actuated by the player making lever with his hand on the equal adjacent sectors, is coming to determine an introduction opening sufficient for the passage of the rod of the club (51); releasing then the mobile sector (54) is coming to block the club (51) into the rack (52).

12. Motorized golf cart, as per claim 10, in that the dispenser (55) by lowering of a drive (56) makes to arrive on the player palm the ball (57); releasing the drive (56) the dispenser (55) take away its initial position so to permit the reloading of other ball foresees into the side stores (58).

13. Motorized golf cart, as per claim 10, in that the dispenser (55) by pressure on its axis can be made reenter into the kit store (24).
